# EUROPEAN PATENT APPLICATION

(11) **EP 2 228 763 A1**
(43) Date of publication of application: **15.09.2010**
(21) Application number: 10425060.0
(22) Date of filing: 10.03.2010
(51) Int. Cl.: G06Q 20/00

(54) **Approval and payment system for accessing to mobility services**

(30) Priority: 12.03.2009 IT FI20090047
(71) Applicant: Fratini, Giacomo, 52016 Castel Focognano, Arezzo (IT); Cipriani, Ivan, 52100 Arezzo (IT)
(72) Inventor: Fratini, Giacomo, 52016 Castel Focognano, Arezzo (IT); Cipriani, Ivan, 52100 Arezzo (IT)
(74) Representative: Mannucci, Michele

(57) **Abstract**

A detection and payment system for access to mobility services, such as roads subject to tolls, uses of rail transports or road transports and the like, comprising a mobile phone (13) and interaction means (12, 14, 15) interacting with the mobile phone (13) arranged at least partially close to the access site (11) for accessing the service. This system provides a direct interaction between the mobile phone (13) and said means (12, 14, 15) and / or vice versa designed a) to recognize the user of the service using said mobile phone (13) and b) to make an association between user and access point (11); this association is processed to calculate the amount to be paid for the service; said interaction means (12, 14, 15) charge said amount to an account associated with the user or to the account associated with the mobile phone.

## Description

### Technical Field

The present invention relates to the field of mobility services, and more in particular the object of the present invention is a detection and payment system for access to mobility services, such as, preferably although not exclusively, roads subject to tolls. Other mobility services can also comprise, for example, the road transport in general and the rail transport or the like.

### State of the Art

As it is well known, the roads subject to tolls (highways, bridges, tunnels, etc.) present at the entrance, at the exit or in both the cases, tollbooths for the identification of the vehicle and/or the toll payment.

In the case for example of the highway toll, generally a vehicle passes an access booth, wherein the driver picks up a ticket, on which the type of vehicle used, the place and the date with the indication of the time of access to the motorway network are indicated. When the vehicle leaves the motorway network, it meets a second booth, where it is necessary to deliver the ticket previously picked up. The amount to be paid is calculated by comparing the data on the ticket and the data concerning the exit booth. This amount can be paid cash or via credit card.

To quicken the phases of entrance in, and exit from, the motorway network, since many years a system by radio has been implemented (also known as "telepass^{®}"), that provides in an automatic manner for the identification of the passages of a given vehicle entering and exiting from the motorway network and for the calculation of the due amount, charging this amount on an adequate account.

More in particular, the telepass^{®} system is composed, from a technical point of view, by an RSE ("Road Side Equipment") ground subsystem arranged at the entrance and exit tollbooths and by an on board apparatus OBU ("On Board Unit"), composed by a transponder to be arranged on the windscreen of the car in the area of the rearview mirror. The transponder (OBU) is a 5.8 GHz DSCR (dedicated short-range communications) system, it has no local oscillator to communicate with the RSE, but it exploits the carrier emitted by the RSE. Practically, it is an active RFID (Radio Frequency IDentification) system, i.e. a system provided with autonomous power supply through batteries in the on board unit or through the connection to the battery of the car. As it is well known, the RFID systems provide for sending a signal from a reader (in this case the RSE); the signal invests the transponder, which answers with another signal containing the data stored in the same transponder. Generally, the telepass® transponder (and the associated electronics) is contained inside a case with external dimension of about 8x5x3 cm.

The practical operation is as follows. The vehicle moves toward the tollbooth and an optical system identifies the vehicle type and actuates the emission of the signal from the tollbooth. The on board equipment answers to the "call" of the ground transmitter, transmitting, in turn, a univocal identification code. The ground control unit registers the passage and commands the crossing bar to rise. If the two parts of the telepass do not communicate, a camera shoots the license plate, so as to identify the author of the non-authorized or unsuccessful passage. In any case, a second optical system confirms the classification of the vehicle type.

The overall transaction occurs in few tenths of a second, preventing the vehicle from stopping at the tollbooth. The elimination of the time necessary for stopping and leaving, and for manual payment, significantly speeds the traffic flow. The toll payment is charged automatically on the bank account of the subscription owner.

Obviously, such a communication system via radio has a significant limitation, i.e. the need for having the transponder (OBU) inside the vehicle. A user using indifferently more vehicles must always take with himself/herself the transponder, actually increasing the risk of loss or theft thereof and furthermore with the evident problems arising when you forget it.

In addition to this, the transponder, even if of small dimensions, occupies a certain volume and putting it in the pockets of jackets or trousers is often an inconvenience, as they are already crowded with keys, wallet, mobile and the like.

### Object and summary of the invention

The object of the present invention is therefore to overcome the above mentioned drawbacks, by providing a system, which allows in a simple and quick manner the identification of the user accessing a mobility service such as, preferably although not exclusively, the highway toll, and which allows the payment of the service, without the need of having an identification device designed only to this function.

This object and other objects, which will be more apparent hereunder, are achieved through a detection and payment system for access to mobility services, such as roads subject to tolls, use of rail transports or road transports or the like, comprising a mobile phone and interaction means interacting with the mobile phone and arranged at least partially close to the access site for accessing the service. The system provides for a direct interaction between mobile phone and said means and/or vice versa, designed a) to recognize the user of the service using the mobile phone and b) to make an association between user and access point; this association is processed to calculate the amount to be paid for the service: the interaction means charge the due amount to an account associated with the user or to the account associated with the mobile phone. "Access point" means the physical place wherein the first communication between mobile phone and interaction means occurs.

### Brief description of the drawings

The invention will be better understood by following the description below and the attached drawings, in which:
- figure 1 is a scheme of the operation of a first embodiment of the system according to the present invention;

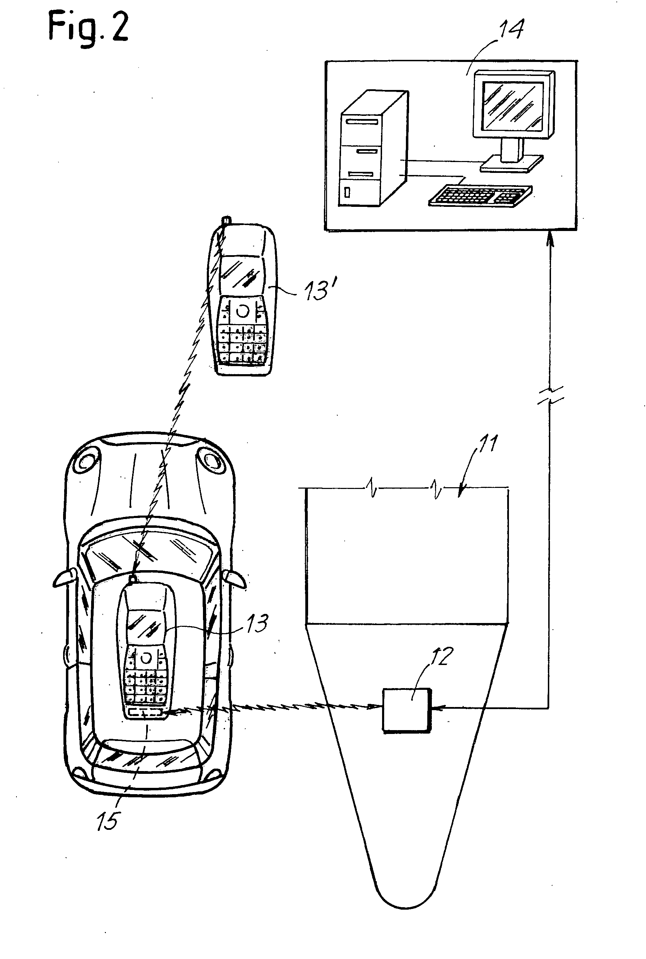

- figure 2 is a scheme of the operation of a second embodiment of the system according to the present invention;
- figure 3 is a scheme of the operation of a third embodiment of the system according to the present invention.

### Detailed description of an embodiment of the invention

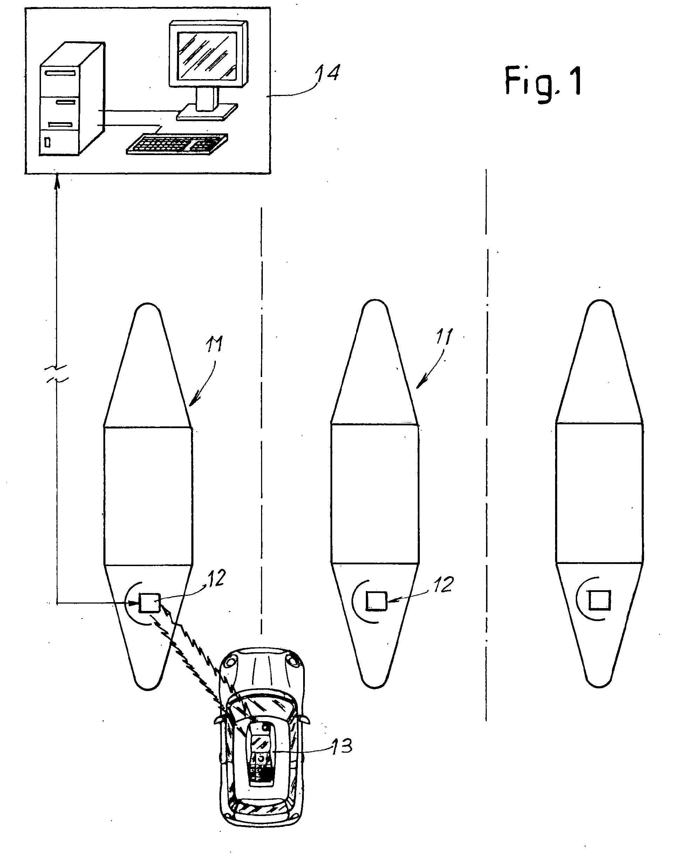

With reference to the previously cited figures, the embodiments of the system according to the present invention are applied to the case of a highway toll. In a first embodiment (see figure 1) the system provides for the use of a mobile phone provided with Bluetooth® communication technology.

Before using the system, the user of the service shall register in a database of the service provider, indicating for example first and last name, address, fiscal code, and indicating the desired payment method (charge to the mobile phone account, credit card withdrawal, bank account withdrawal), telephone number, e-mail. This registration can occur for instance through the Internet connection to the site of the provider, where a user's account is created.

Once the registration has been performed, the provider's server creates a "user's profile" and sends to the user, for instance through e-mail, an identification password for operation of the service, as better explained below.

Close the entrance tollbooth 11 for accessing the motorway network there is an electronic device 12, designed to communicate according to the Bluetooth® protocol. This device 12 is active in the search of mobile phones provided with Bluetooth® technology, with which enter into communication. The electronic device 12 is furthermore provided with an adequate electronic program (hereunder indicated generically with the word "software"), which allows to actuate the search at regular intervals, according to the necessary specific technical requirements. An optimum interval between the start of a search and the subsequent search is about 2 seconds.

The mobile phone 13 of the user arriving by car to the entrance tollbooth 11 for accessing the motorway network is provided with an adequate software, which allows its own Bluetooth® component to enable the communication with the device of the booth in an automatic manner, without the need for an explicit consent to the data exchange. Once the Bluetooth® connection has been established, the mobile phone 13 is in communication with the booth 11 and transmits its own identification data, among which the password previously assigned during the phases of registration to the service, determining the univocal identification of the user. Obviously, also in the electronic device 12 of the booth there is preferably software, which allows the acceptance of certain input data without the need for specific authorizations, so as to automate the receipt of information from the mobile phone.

The electronic device 12 of the booth 11 is in communication with the server 14 of the service provider (or anyway with another server for managing the service), for instance through a Wlan network. In the management server the passage of the mobile phone is therefore registered (the identification of the vehicle type can occur for instance through the methods already known and previously described), in particular the identification occurs of the user through verification of the identification password, and the registration of the booth where the passage occurred, of the date and time of the passage, and of the vehicle type. Once the user has been identified, the server 14 can send to the booth 11 a command for opening the gate. Alternatively, it is possible to enable booths without crossing bar, without the need for a return signal from the server.

When the user arrives close to the exit booth of the motorway network, an electronic device analogous to that present in the entrance booth identifies the Bluetooth® component of the user's mobile phone and sets up a communication with data exchange, in a manner substantially analogous to that described for the entrance phase. In particular, to the management server 14 is transmitted the datum with the password identifying the user, together with the data concerning the booth and the date/hour of the passage. At this point the server 14, once having identified the user, can send to the booth 11 the command for opening the gate (this command is not necessary in the case of booths devoid of gate). With the data of the passage of the user, the server 14 calculates the toll amount and charges it according to the methods selected by the user, i.e. amount charged through phone service (charge to the subscription account or the prepaid account of the mobile phone), or credit card or bank account charge. Obviously, other payment methods are also possible. Once the amount to be charged has been calculated, the server can allow, as the case may be, sending a short message (sms) to the mobile phone with the indication of the charge and the data related to the passage (place and date/hour).

Practically, with a system of this type, it is possible to access the mobility services in an extremely simple manner, without the need of taking with you a device designed to communicate in a remote manner with the booth. In fact, the user shall simply take with him/her the mobile phone, enabled for the service.

Practically, the system according to the present invention is composed by a mobile phone 13 with Bluetooth® technology and interaction means for the interaction with the mobile phone comprising a pair of electronic devices 12 provided with Bluetooth® technology arranged at the entrance (i.e. the place of access the service) and exit booths 11. There is a direct interaction between the electronic device and the mobile phone, allowing the recognition of the user of the service (i.e. the user of the mobile phone) and creating an association between the same user and the place of accessing the service. This association, i.e. the storage of the access place and the access date /hour of a given user, allows to calculate the toll amount and the consequent charge of the amount. Obviously, the electronic devices provided with Bluetooth® technology can comprise electronic units provided with electronic processors and memories for storing and processing the data, as well as other electronic means for the interaction with the various functions of the booth.

In the described example, the interaction means also comprise the remote server 14 managing the identification data coming from the electronic devices of the booths and allowing to calculate and to charge the amounts due for the service.

Obviously, this system can be applied to cases in which the "access sites" to the service, i.e. the physical place wherein occurs the first interaction between mobile phone and interaction means, can be different from that of a physical access to a road network, i.e. the system can be applied also in the case of a toll highway where there is only an exit booth and no entrance booth, or in the cases in which the toll is fixed, independently of the place of access or exit from the motorway network. In this case the interaction of the mobile phone will occur with a single electronic device.

It should be noted how, by acting on the mobile phone, it is possible to deactivate the Bluetooth® function if one does not desire to exploit the communication with the device of the booth (for example if one travels with someone else who desires to pay in a different manner).

A second embodiment of the present invention provides that for the communication between the electronic device 12 of the booth 11 and the mobile phone 13 of the user of the service instead of the Bluetooth® technology a radio communication technology is used, analogous to that currently known for the telepass® system described above. The idea is substantially that of integrating a transponder 15 (and the electronics for the operation thereof) inside the mobile phone and to make it communicate with an electronic device 12 constituted by a ground RSE subsystem arranged at the booths, creating an RFID system, preferably of the active type.

The mobile phone therefore interacts directly with the RSE subsystem, to perform the identification of the user. The electronic means associated to the subsystem (electronic device 12) provide therefore to send the data on recognition and passage to the management server 13, which calculates the amounts and charge them according to the methods described above.

A solution of this type, even if requires an adequate predisposition of the mobile phones, allows to avoid always to take with you a "transponder" object (what is usually made with the mobile phones) but, furthermore, it allows the transponder and the electronics thereof to interact directly with the electronics of the mobile phone for example sharing the same energy source and allowing also to disable the transponder by acting on the phone, as well as to reprogram the electronics of the transponder (software or firmware) both for upgrading the system and for modifying stored data. These operations can be performed for example by putting into communication the electronics of the transponder with a remote server through the mobile phone network, or through the Internet if the mobile phone is connected to it, or directly via radio (for example UMTS network) or through connection to a personal computer, connected in turn to the network. Obviously, the mobile phone 13 is able to communicate in a conventional manner with any other mobile phone 13'.

Moreover, in a third embodiment of the present invention, the interaction means for interacting with the mobile phone 13, which are designed to allow the recognition of the service user and to make an association between user and access point that can be processed for calculating the due amounts to be charged, comprise an adequate sign-code 15 arranged at the booth 11 to identify the booth, a camera 13A integrated in the mobile phone and designed to "capture" the image of the sign-code, and a software inside the mobile phone designed to analyze the image of the sign-code 15 acquired through the camera 13A and to transform it in the data corresponding to the information about the booth. This data is then sent through sms (or other method exploiting the telecommunication network to which the phone accesses) to the management server 14, which identifies the sending phone number and registers it together with the data associated to the sign-code 15. Based on this data and on the data detected at the exit booth in the same manner described above, the server 14 calculates the due amount and charges it on the credit card or on a bank account associated with the phone number or on the prepaid account of the phone number, according to the methods provided during the registration phase as previously described.

Advantageously, the sign-code 15 can be of the dynamic type and give information variable over time, such as for example one or more of the following data: the date and the hour, the indication of the booth number and whether it corresponds to an exit or an entrance, the indication of the vehicle category detected by the common detection means present at the booth, the indication of a variable security code that can be identified by the server according to the booth number and the time of the passage, and the indication of the phone number to which the sms must be sent. Such a sign-code can be for example through a light display, for example a LED display, forming an on/off dot matrix. Alternatively, the sign-code can be realized through for example an LCD or plasma monitor.

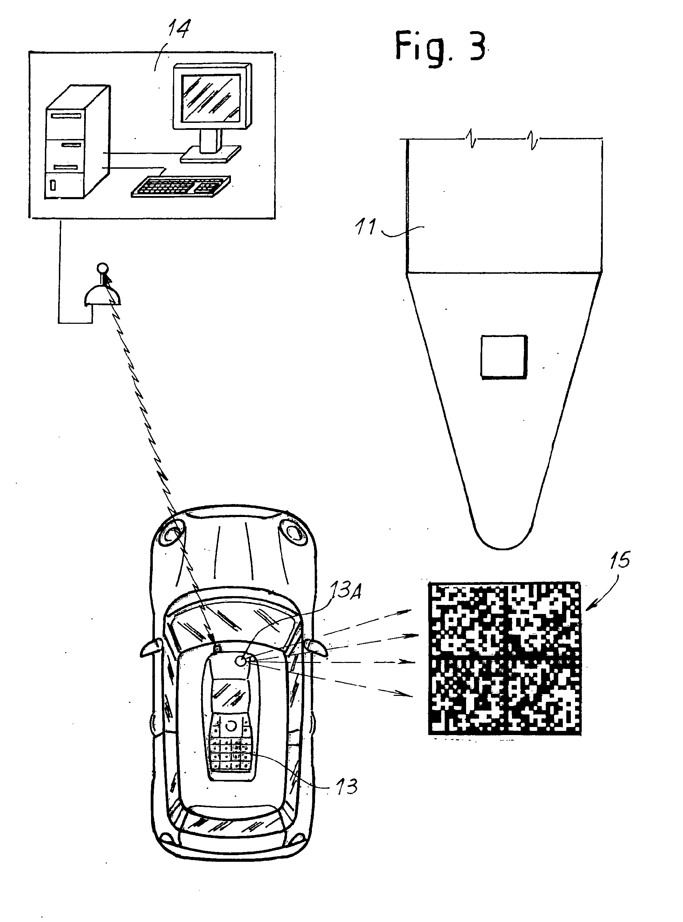

Adequately, this sign-code will have the standard matrix code (MC matrix code), also known as "QR code" (Quick Response code). The matrix codes are an evolution of the traditional bar code. The advantage of this particular type of two-dimensional code is the fact that it is designed to contain much more information and it can be detected through cameras of mobile phone provided with adequate software. An example of this code is shown in figure 3. This figure shows the following data: "SMS to 3338124278 Input Ticket port A22, Date 23-12-08, time 10,30, code B2". The software for acquiring the image can, as the case may be, encode the decoding of the code, so that the user cannot understand the meaning of the string acquired in the phone and modify in a fraudulent manner the message before sending it to the server (for example by modifying the vehicle category). In the case of encrypting, the server will be provided with adequate decoding software. In this regard it should be noted that for a telephone company the costs for sms are negligible and the quantity of transferred data can be reduced to 15 characters to represent nearly 150,000 combinations (for example first item entrance booth code three characters, second item hour-minutes-day-month-year with ten characters, third item vehicle code with two characters); in the phase of scrambling, assuming the use of 100 of the 127 characters of the ASCII code, they reduce to only three characters with an infinitesimal transmission time.

Obviously, the software for generating the matrix code can be of the proprietary type, or different from those currently known, and particularly designed for this specific use.

Obviously, as in the cases described above, the system using the matrix code can be used also to open the gate of the booth both at the entrance (once the server has received the sms with the data from the mobile phone) and the exit. Obviously, the system can be used also for booths without gate, simply communicating the passage through sending the sms to the server.

The above described systems can be applied also for accessing mobility services different from those of a simple road transit. For example, it is possible to use the same system for accessing a railroad service. The user with the mobile phone, moving toward an electronic totem pole present at the shelter associated with the platform roof of the train to be taken, will exchange data in the above described manner. Obviously, the information about the train in this totem pole will change dynamically according to the train passing over that line. Obviously, this totem pole can be arranged, instead of near the shelter, inside the train. Similar considerations can be made for example for bus services.

Obviously, the systems described herein can adapt to the most various cases of accesses, also with methods of communication procedures (types of data to be communicated, encrypting level of the information, order for data communication, etcetera) among the various components that can be different from those indicated, which have been indicated just by way of example.

It is understood that what illustrated purely represents possible non-limiting embodiments of the present invention, which may vary in forms and arrangements without departing from the scope of the concept on which the invention is based. Any reference numbers in the appended claims are provided for the sole purpose of facilitating the reading thereof in the light of the description hereinbefore and the accompanying drawings and do not in any way limit the scope of protection of the present invention.

## Claims

1. A recognition and payment system for access to mobility systems, such as roads subject to tolls, use of rail transport or road transport and the like, comprising a mobile phone (13) and interaction means (12, 14, 15) interacting with the mobile phone (13) arranged at least partially close to the access site (11) for accessing the service, said system providing a direct interaction between the mobile phone (13) and said means (12, 14, 15) and / or vice versa designed to a) recognize the user of the service using said mobile phone (13) and b) to make an association between user and access point (11), said association being processed in order to calculate the amount to be paid for the service, said interaction means (12, 14, 15) charging said amount to an account associated with the user or to the account associated with the mobile phone.

2. A system as claimed in claim 1, **characterized in that** said interaction means comprise an electronic device (12) arranged close to the access point of the mobility service designed to perform a wireless connection with said mobile phone (13), said device (12) performing the univocal recognition of said mobile phone (13) and the transmission of the access data for the identified mobile phone to a management server (14) in which the user is registered.

3. A system as claimed in claim 2, **characterized in that** said electronic device (12) and said mobile phone (13) comprise Bluetooth® technology in order to reciprocally communicate by radio.

4. A system as claimed in claim 3, **characterized in that** said mobile phone (13) comprises an electronic program designed to accept in an automatic manner the requests for connection from said electronic device (12).

5. A system as claimed in claim 2 or 3, **characterized in that** said mobile phone (13) and / or said electronic device (12) comprise a respective electronic program designed to accept in an automatic manner data sent respectively by said electronic device (12) to said mobile phone (13) and / or vice versa.

6. A system as claimed in claim 2, **characterized in that** said electronic device (12) and said mobile phone (13) constitute a communication system with RFID technology, in said mobile phone (13) being integrated a transponder (15) designed to communicate with an electronic device (12) comprising an RFID reader.

7. A system as claimed in claim 6, **characterized in that** said transponder (15) is an RFID of the active type, is powered from the battery of the mobile phone (13) and is designed to interact with the electronics of the mobile phone for the management of at least one part of its functionalities.

8. A system as claimed in one or more of claims 1 to 7, **characterized in that** it comprises the following phases for the recognition and the payment of a highway toll, after registration of the user of the service, with the indication of the number of the enabled mobile phone (13) and attribution of a univocal password or user's ID code,
- a) moving of the mobile phone (13) towards the entrance toll booth (11),
- b) sending at least one signal for searching mobile phones provided with technology designed to receive said signal from electronic means (12) present at the entrance toll booth (11),
- c) answer of the mobile phone (13) moving towards the booth (11), sending at least one datum corresponding to the password or user's code to said electronic means (12),
- d) transmission by said electronic means (12) of the booth (11) of the data corresponding to the time of the recognition of said mobile phone (13) and of the identification data of the user associated with said phone (13) to a server (14) for data management,
- e) moving of the mobile phone (13) towards the exit toll booth (11),
- f) repetition of the steps b), c), and d), and subsequent calculation by said server (14) of the amount of the toll and charge of said amount to a payment center based upon the information acquired at the user's registration.

9. A system as claimed in claim 8, **characterized in that**, after the phase d) and / or f), a respective phase occurs of identification of the registered user by said server (14) with a subsequent transmission to the booth (11) of the permission for opening the gate of the booth.

10. A system as claimed in claim 1, **characterized in that** said interaction means comprise a sign - code (15) arranged near the access site (11) for accessing the mobility service, said sign - code (15) representing an image encoding at least one datum significant for the access to the mobility service, said mobile phone (13) being provided with a camera (13A) for detecting the image of said sign - code (15), said mobile phone (13) being further provided with an electronic program designed to analyze the image of said sign - code (15) and to transform it in said at least one significant datum for accessing the mobility service, said at least one datum being subsequently sent to said server (14) by means of a short message (sms) or by means of telephone call, in the electronic program of said mobile phone (13) being present, in case, an encoding function for encoding the datum from the image of said sign - code (15) and in said server (14) being present an electronic program for decoding the encoding made in the mobile phone.

11. A system as claimed in claim 10, **characterized in that** said sign - code (15) is of the dynamic type so as to give information changeable over the time, such as preferably one or more of the following data: the date and the hour, the indication of the point of access to the service, the indication whether said point corresponds to an exit or an entrance, the indication of a variable security code which can be identified by the server (14) according to the access point and / or the time of the passage, the indication of the mobile phone number to which the sms must be sent or to be called with the indication of one or more of said data.

12. A system as claimed in claim 11, **characterized in that** said sign - code (15) is a a plasma or LCD monitor or a LED display with LEDs defining a on/off dot matrix .

13. A system as claimed in one of claims 10, 11, or 12, **characterized in that** said sign - code (15) is with a datum representation standard of the two - dimensional type, preferably of the "matrix code" type or of the "QR code" type.

14. A system as claimed in one or more of claims 10 to 13, **characterized in that** it comprises the following phases for the recognition and the payment of a highway toll, after registration of the user of the service, with the indication of the number of the enabled mobile phone (13) and attribution of a univocal password or user's ID code,
- a) moving of the mobile phone (13) towards the entrance toll booth (11),
- b) acquisition by means of a camera (13A) of the image of said sign - code (15);
- c) processing said image into at least one datum identifying said booth and the transit time,
- d) sending, through sms or telephone call to a management server (14), said at least one datum together with a datum for univocal identification of the sending mobile phone,
- e) moving of the mobile phone (13) towards the exit toll booth (11),
- f) repetition of the steps b), c), and d), and subsequent calculation by said server (14) of the amount of the toll and charge of said amount to a payment center based upon the information acquired at the user's registration.

15. A mobile phone, **characterized in that** it has integrated inside it an RFID transponder of the active type, designed to send to RFID readers at least one datum for univocal identification, said transponder being powered through the battery of said mobile phone.
